# EUROPÄISCHE PATENTANMELDUNG

(11) **EP 0 574 841 A1**
(43) Veröffentlichungstag der Anmeldung: **22.12.1993**
(21) Anmeldenummer: 93109353.8
(22) Anmeldetag: 11.06.1993
(51) Int. Cl.: H02K 15/04

(54) **Verfahren und Vorrichtung zum Herstellen von Stator- oder Rotorwicklungen elektrischer Maschinen aus Paralleldrähten**

(30) Priorität: 15.06.1992 DE 4219594; 15.06.1992 DE 4219374
(71) Anmelder: ELMOTEC GmbH, D-61184 Karben (DE)
(72) Erfinder: Kleinschmidt,Dieter, D-6367 Karben (DE)
(74) Vertreter: Knoblauch, Andreas, Dr.-Ing.

(57) **Zusammenfassung**

Es wird ein Verfahren und eine Vorrichtung zum Herstellen von Rotor- oder Statorwicklungen elektrischer Maschinen aus Paralleldrähten angegeben, bei dem Spulen einer Spulengruppe (30) auf einer Schablone (12) durch Drehen der Schablone unter Abziehen der Paralleldrähte aus einer in Umfangsrichtung der Schablone ortsfesten Zuführeinrichtung (18) gewickelt und die fertige Spulengruppe dann auf einen Spulenaufnehmer (14) übertragen wird, angegeben.

Damit soll die Produktionszeit beim Herstellen von Wicklungen elektrischer Maschinen verringert werden.

Der Spulenaufnehmer (14) ist hierzu relativ zur Schablone (12) in vorbestimmte Übergabewinkelstellungen verbringbar und weist einen Aufnahmeraum für alle oder zumindest mehrere Spulengruppen einer Wicklung auf. Es werden nacheinander mehrere Spulengruppen (30) auf den Spulenaufnehmer übertragen, wobei der Spulenaufnehmer für jede Spulengruppe in eine andere Drehwinkelstellung in Bezug zur Schablone verbracht wird.

## Beschreibung

Die Erfindung betrifft ein Verfahren zum Herstellen von Stator- oder Rotorwicklungen elektrischer Maschinen aus Paralleldrähten, bei dem Spulen einer Spulengruppe auf einer Schablone durch Drehen der Schablone, insbesondere unter Abziehen der Paralleldrähte aus einer in Umfangsrichtung der Schablone ortsfesten Zuführeinrichtung, gewickelt und die fertige Spulengruppe dann auf einen Spulenaufnehmer übertragen wird und eine Vorrichtung zum Herstellen von Stator- oder Rotorwicklungen elektrischer Maschinen aus Paralleldrähten mit einer drehbaren Schablone, die einen Schablonenantrieb aufweist, einer in Umfangsrichtung der Schablone ortsfesten Drahtführung und einem Spulenaufnehmer, insbesondere zur Durchführung des Verfahrens.

Das Herstellen von Wicklungen elektrischer Maschinen aus Paralleldrähten ist relativ schwierig. Grundsätzlich sollte hierbei das Verdrillen der Paralleldrähte vermieden werden. Durch das Verdrillen der Paralleldrähte ändern sich beispielsweise die gewünschten Außenabmessungen der fertigen Spulengruppen, so daß diese nicht mehr in die Rotor- oder Statornuten der elektrischen Maschinen oder bereits vorher in die Schlitze der zum Einbau notwendigen Übertragungs- und Einziehwerkzeuge passen.

Zum Herstellen von Wicklungen aus mehreren Lagen Paralleldrahtes ist es daher bekannt, Windungen auf eine rotierende Schablone aufzuwickeln, wobei der Paralleldraht durch eine in Umfangsrichtung ortsfeste, aber parallel zur Schablone verfahrbare Zuführeinrichtung zugeführt wird. Der Paralleldraht kann beispielsweise von einer Vorratsrolle abgewickelt oder aus einer Vorratstonne entnommen werden. Bei der Drehung der Schablone wird der Draht aus der Zuführeinrichtung auf die Schablone gezogen. Um eine Spulengruppe zu wickeln, fährt die Zuführeinrichtung entlang der Schablone, die für einzelne Spulen der Spulengruppe getrennte Kammern aufweist, die nacheinander bewickelt werden. Nach Beendigung des Wickelvorganges wird die fertig gewickelte Spulengruppe mittels eines hierfür abgestimmten Übertragungswerkzeuges abgenommen, auf ein Einziehwerkzeug übertragen und in den Stator eingezogen. Um eine Phase herzustellen, wird zum Beispiel bei einem vierpoligen Motor viermal der beschriebene Vorgang wiederholt. Hierbei entsteht der Nachteil, daß wiederholte gleichartige Übertragungsschritte notwendig sind, die relativ zeitaufwendig sind.

Der Erfindung liegt daher die Aufgabe zugrunde, ein Verfahren und eine Vorrichtung anzugeben, mit der Wicklungen elektrischer Maschinen schnell und zuverlässig hergestellt werden können.

Diese Aufgabe wird bei einem Verfahren der eingangs genannten Art dadurch gelöst, daß nacheinander mehrere Spulengruppen auf den Spulenaufnehmer übertragen werden, wobei der Spulenaufnehmer für jede Spulengruppe in eine andere Drehwinkelstellung in Bezug zur Schablone verbracht wird.

Im Gegensatz zu bisher bekannten Verfahren wird also nicht jede Spulengruppe getrennt für sich in den Stator oder den Rotor der elektrischen Maschine eingezogen, sondern es kann eine komplette Phase auf den Spulenaufnehmer bereitgestellt und dann mit einemmal in den Stator oder den Rotor eingeführt werden. Dies hat neben dem Vorteil der Ersparnis von Übertragungsschritten auch den Vorteil, daß die einzelnen Spulengruppen bereits auf dem Spulenaufnehmer miteinander verschaltet werden können. Auf dem Spulenaufnehmer steht in der Regel mehr Platz für die Handhabung der Spulenanschlüsse zur Verfügung. Die Drehwinkelstellungen können bevorzugterweise durch Indexierung, also Verdrehen um vorbestimmte Winkelbeträge, eingestellt werden.

Bevorzugterweise wird der Spulenaufnehmer während des Wickelns der Spulengruppe in seine entsprechende Übergabeposition verfahren. Auch hierdurch wird Zeit eingespart.

Auch ist bevorzugt, daß die Spulengruppen jeweils in einem Zug von der Schablone auf den Spulenaufnehmer übertragen werden. Wenn die Spulen in Bewegung sind, muß nur noch Gleitreibung und keine Haftreibung mehr überwunden werden. Die Bewegung in einem Zug ist daher nicht nur zeitsparend, sondern auch steuerungstechnisch und energetisch vorteilhaft. Zur Unterstützung kann die Schablone entspannt werden.

Mit Vorteil wird der Spulenaufnehmer zumindest dann, wenn er eine Spulengruppe aufgenommen hat, synchron mit der Schablone gedreht, solange diese bewickelt wird. Es ist in diesem Fall nicht mehr notwendig, die Paralleldrähte zwischen den einzelnen Spulengruppen zu durchtrennen. Vielmehr wird durch die gemeinsame Drehung des Spulenaufnehmers mit der Schablone gewährleistet, daß der räumliche Abstand zwischen zwei elektrisch hintereinander geschalteten Spulengruppen nicht größer werden kann, als es die elektrische Verbindung zwischen den einzelnen Spulengruppen zuläßt. Die relative Zuordnung der fertig gewickelten Spulengruppe und der neu zu wickelnden beziehungsweise aktuell gewickelten Spulengruppe bleibt erhalten. Da nun keine Verbindungen der Spulengruppen von Hand mehr hergestellt werden müssen, läßt sich hierdurch eine beträchtliche Steigerung der Produktionsgeschwindigkeit erzielen. Die von Spulengruppe zu Spulengruppe geführten Paralleldrähte werden also weder miteinander verdrillt noch durch eine beim Wickelvorgang möglicherweise sich vergrößernde Entfernung der beiden Spulengruppen in unzulässiger Weise überdehnt oder auseinandergerissen. Die fertige Phase kann dann mit einem einzigen Einziehvorgang in den Rotor oder den Stator eingeführt werden. Die Verschaltungen der einzelnen Spulengruppen sind dann bereits vorhanden. Fehler, die beim Verbinden der einzelnen Spulengruppen von Hand entstehen könnten, werden mit hoher Zuverlässigkeit ausgeschaltet. Auch sind derartige Wicklungen im Betrieb zuverlässiger, da sich keine Verbindungen der Spulengruppen lösen können.

Mit Vorteil werden der Spulenaufnehmer und die Schablone zum Wickeln der Spulengruppe in eine erste radiale Ausrichtung zueinander und zur Übergabe der Spulengruppe in eine zweite radiale Ausrichtung zueinander gebracht. Es gibt also mit anderen Worten eine Wickelpositionen, bei der die Schablone und der Spulenaufnehmer eine erste radiale Ausrichtung zueinander haben, und eine Übergabeposition, in der die Schablone und der Spulenaufnehmer eine zweite radiale Ausrichtung zueinander haben. Durch diese beiden Positionen lassen sich Unwuchten verkleinern. In der Übergabeposition befindet sich nämlich die Schablone in bezug auf den Spulenaufnehmer relativ weit außermittig. Würden beide Teile zusammen gedreht werden, ergäbe sich eine große Unwucht. Andererseits läßt sich eine Übergabe der Spulengruppe in der Wickelposition ohne zusätzliche Maßnahmen nur schwer realisieren. Durch die Verschiebbarkeit von Spulenaufnehmer und Schablone radial zueinander wird dieses Problem auf elegante Art und Weise umgangen. Man kann hierbei entweder bei radial unbeweglicher Schablone den Spulenaufnehmer in bezug auf die Schablone verschieben oder man kann bei radial unbeweglichem, also ortsfestem Spulenaufnehmer die Schablone in eine radiale Richtung bewegen. Selbstverständlich ist auch die Kombination beider Möglichkeiten denkbar.

Um die Unwucht beim Wickeln möglichst klein zu halten, ist in einer bevorzugten Ausgestaltung vorgesehen, daß in der ersten radialen Ausrichtung die Mittellängsachsen von Schablone und Spulenträger auf einer gemeinsamen Drehachse angeordnet sind. Beim Wickeln drehen sich also sowohl die Schablone als auch der Spulenträger jeweils um ihren Mittelpunkt. Aufgrund der relativ geringen Unwucht lassen sich hohe Wickelgeschwindigkeiten erzielen.

Eine noch etwas bessere Verringerung der Unwucht wird in einer anderen bevorzugten Ausgestaltung dadurch erreicht, daß in der ersten radialen Ausrichtung die Mittellängsachse der Schablone und der Massenschwerpunkt des bewickelten Spulenaufnehmers zumindest annähernd auf einer gemeinsamen Drehachse angeordnet sind. Hierbei ist der Massenschwerpunkt der Schablone ohnehin auf der Mittellängsachse angeordnet. Der Massenschwerpunkt des bewickelten Spulenaufnehmers resultiert aus dem Massenschwerpunkt des unbewickelten Spulenaufnehmers und den Massenschwerpunkten der bereits auf dem Spulenaufnehmer befindlichen Spulengruppen. Da das Gewicht einer Spulengruppe aber in der Regel wesentlich geringer ist als das Gewicht des Spulenaufnehmers, läßt sich hier durch relativ geringe Verschiebungen des Spulenaufnehmers in radiale Richtung erreichen, daß der Massenschwerpunkt des kombinieren Systems Spulenaufnehmer mit Spulengruppen auf der Drehachse liegt.

In einer bevorzugten Ausgestaltung wird der Spulenaufnehmer nur während des Wickelns der ersten Spule nicht mitgedreht, sondern in die zweite radiale Ausrichtung zur Schablone verbracht. Beim Wickeln der ersten Spulengruppe besteht noch keine Gefahr, daß die Paralleldrähte, die die Verbindung zu einer anderen Spulengruppe einer Phase herstellen sollen, durch eine Relativbewegung zwischen Spulenaufnehmer und Schablone abgerissen oder verdrillt werden. Man kann sich dies zunutze machen, um den Spulenaufnehmer bereits in die Übergabeposition zu verfahren. Hierdurch ergibt sich eine zwar geringe, aber merkliche Zeitersparnis, die zur Beschleunigung der Herstellung ausgenutzt werden kann.

Bevorzugterweise werden der Spulenaufnehmer und die Schablone zur Übergabe der Spulengruppe miteinander in Eingriff gebracht. Die Schablone kann sich also unbeeinflußt vom Spulenaufnehmer drehen, um die Spule aufzuwickeln. Erst wenn die Spule fertig ist, wird ein Eingriff zwischen Spulenaufnehmer und der Schablone hergestellt. Mit einem derartigen Eingriff wird die Übergabe zwischen der Schablone und dem Spulenaufnehmer vereinfacht. Die Spulengruppe muß nur noch von der Schablone auf den Spulenaufnehmer geschoben werden. Da die beiden letztgenannten Teile miteinander in Eingriff stehen, ist die zuvor bestehende Lücke geschlossen. Einzelne Spulenwindungen können nicht in falsche Schlitze geraten.

Weiterhin ist in einer bevorzugten Ausgestaltung vorgesehen, daß um 180° auf dem Spulenaufnehmer auseinanderliegende Spulengruppen unmittelbar aufeinanderfolgendend gewickelt werden. Dies hat den Vorteil, daß eine durch Spulengruppen bedingte Unwucht des Spulenaufnehmers immer nur beim Wickeln jeder zweiten Spulengruppe auftritt. Sobald die einzelnen Spulengruppen paarweise auf dem Spulenaufnehmer angeordnet sind, sind sie miteinander im Gleichgewicht. Das Auswuchten wird relativ einfach.

Die Aufgabe wird auch durch eine Vorrichtung der eingangs genannten Art gelöst, bei der der Spulenaufnehmer relativ zur Schablone in vorbestimmte Übergabewinkelstellungen verbringbar ist und einen Aufnahmeraum für alle oder zumindest mehrere Spulengruppen einer Wicklung oder Teil-Wicklung aufweist.

In jeder Winkelstellung kann der Spulenaufnehmer die zu dieser Winkelstellung gehörenden Spulengruppe aufnehmen. Da ausreichend Platz für alle Spulengruppen einer Wicklung oder einer Teil-Wicklung, d.h. eines Pols, zur Verfügung stehen, kann unter Ersparnis einer Vielzahl von Übergabevorgängen in die Maschine der Pol beziehungsweise die Wicklung vollständig vorgefertigt werden.

Hierbei ist bevorzugt, daß der Spulenaufnehmer drehbar gelagert ist und einen mit dem Schablonenantrieb synchronisierten Aufnehmerantrieb aufweist, wobei Schablone und Spulenaufnehmer zumindest in eine radiale Richtung relativ zueinander bewegbar sind. Diese Drehbarkeit des Spulenaufnehmers synchron mit der Schablone ist zusätzlich zu den Indexierungen, d.h. Verbringbarkeit des Spulenaufnehmers relativ zur Schablone vorgesehen. Während die Verbringbarkeit in verschiedene Übergabewinkelstellungen dazu dient, die einzelnen Spulengruppen relativ zueinander richtig auf dem Spulenaufnehmer zu positionieren, dient die Drehbarkeit des Spulenaufnehmers synchron mit der Schablone dazu, die relative Lage der letzten fertig gewickelten Spulengruppe zur aktuell gewickelten Spulengruppe beizubehalten, um die Paralleldrähte, die die beiden Spulengruppen miteinander verbinden, nicht zu verdrillen oder abzureißen. Andererseits wird durch die relative Bewegbarkeit von Schablone und Spulenaufnehmer in zumindest eine radiale Richtung sichergestellt, daß der Spulenaufnehmer so zur Schablone verbracht werden kann, daß er die fertig gewickelte Spulengruppe aufnehmen kann. Er kann aber auch so weit wieder in die entgegengesetzte Richtung verfahren werden, daß er eine Unwucht beim Rotieren relativ gering hält. Der Aufnehmerantrieb kann durch einen Motor, ein Getriebe oder direkt durch die Schablone gebildet sein. Dieser Antrieb kann gegebenenfalls auskuppelbar sein.

Hierbei ist bevorzugt, daß die Schablone und der Spulenaufnehmer in einer ersten radialen Stellung relativ zueinander eine gemeinsame Drehachse aufweisen und in einer zweiten radialen Stellung Aufnahmeelemente des Spulenaufnehmers mit der Schablone in Eingriff bringbar sind. Die erste radiale Stellung ist also eine Wickelstellung, in der sich Schablone und Spulenaufnehmer gemeinsam drehen können. Die zweite Stellung ist die Übergabestellung, in der die Spulengruppe von der Schablone auf den Spulenaufnehmer wechseln kann. Außerhalb der Übergabestellung sind dann Schablone und Spulenaufnehmer nicht in Eingriff miteinander.

Mit Vorteil verläuft die Drehachse etwa durch den Massenschwerpunkt des leeren Spulenaufnehmers beziehungsweise bei beladenem Spulenaufnehmer durch den resultierenden Massenschwerpunkt des Spulenaufnehmers und der darauf befindlichen Spulengruppen. Hierdurch wird eine Unwucht beim Drehen oder Rotieren des Spulenaufnehmers weitgehend vermieden. Die Drehzahl kann hierdurch beträchtlich gesteigert werden. Da sich der Spulenaufnehmer und die Schablone gemeinsam drehen müssen, kann hierdurch die Wickelgeschwindigkeit erhöht und die Zeit zum Herstellen einer Spulengruppe drastisch vermindert werden.

Bevorzugterweise sind die Schablone und/oder der Spulenaufnehmer in der zweiten Stellung axial zueinander bewegbar. Dies ist eine relativ einfache Möglichkeit, um Aufnahmeelemente des Spulenaufnehmers mit der Schablone in Eingriff zu bringen.

Auch ist von Vorteil, daß der Spulenaufnehmer und/oder die Schablone auf je einem drehbaren Träger montiert und radial zu diesem verschiebbar sind. Durch die Drehbarkeit des Trägers wird die Drehbarkeit des Spulenaufnehmers beziehungsweise der Schablone sichergestellt. Durch die radiale Verschiebbarkeit des Spulenaufnehmers beziehungsweise der Schablone zur ihrem Träger läßt sich sicherstellen, daß der resultierende Massenschwerpunkt jeweils auf der Drehachse liegt.

Hierbei ist bevorzugterweise der Träger senkrecht zur Drehachse bewegbar. Hierdurch läßt sich ein Wechsel von Wickelposition und Übergabeposition relativ rasch erzielen. Es reicht sogar aus, wenn der Träger in eine einzige Richtung vorwärts und rückwärts bewegbar ist. Die unterschiedlichen Wickelpositionen, in denen die Spulengruppen angeordnet werden müssen, können dann durch ein Verdrehen des Spulenaufnehmers erreicht werden.

Bevorzugterweise ist der Träger in mindestens zwei Positionen festlegbar. Diese Positionen sind so gewählt, daß sich in der einen Position der Spulenaufnehmer in bezug auf die Schablone in der Wickelposition befindet, während er sich im anderen Fall in der Übergabeposition befindet.

Mit Vorteil sind die Aufnahmeelemente spannbar. Hierdurch lassen sich die Spulengruppen nach der Übergabe von der Schablone auf den Spulenaufnehmer auf dem Spulenaufnehmer festlegen. Durch die Spannung wird die Reibung zwischen Spulenaufnehmer und Spulengruppen erhöht. Die Gefahr, daß sich einzelne Spulen der Spulengruppen versehentlich vom Spulenaufnehmer lösen und zu einer Verwirrung der Paralleldrähte führen, ist hierdurch vermindert.

Mit Vorteil sind die Aufnahmeelemente hierbei durch Stäbe gebildet, von denen zumindest einige in Bezug zu ihrer Aufnahmestellung neigbar sind. Da sich die Spulengruppen über eine gewisse Länge auf den Stäben verteilen, ist hierdurch die Spannbarkeit zumindest für einen Teil der Spulen gewährleistet. Andererseits bewirkt die Neigung der Stäbe, daß die einzelnen Spulengruppen nicht mehr von dem Spulenaufnehmer herunterrutschen können.

Vorteilhafterweise weist die Schablone eine Abstreifvorrichtung auf. Wenn nun die Spulengruppen fertig gewickelt sind, erleichtert und beschleunigt die Abstreifvorrichtung das Wechseln der Spulengruppen von der Schablone auf den Spulenaufnehmer.

Hierzu weist die Schablone bevorzugterweise mehrere Kammern auf, wobei jede Kammer mit einer über den radialen Umfang der Kammer vorstehenden Haltefingereinrichtung versehen ist, die durch eine Bewegung der Abstreifeinrichtung absenkbar ist. Die Haltefingereinrichtung, die im einfachsten Fall aus mehreren Haltefingern bestehen kann, hält die einzelnen Spulen der Spulengruppe in ihren jeweiligen Kammern fest. Die einzelnen Kammern können beispielsweise durch nebeneinander angeordnete Zylinderabschnitte mit unterschiedlichen Durchmessern gebildet sein. Wenn nun die Abstreifeinrichtung in Aktion tritt, übt sie nicht nur eine axial gerichtete Kraft auf die einzelnen Spulen aus, sie senkt auch im Verlauf der Abstreiferbewegung, d.h. kurz vor dem Abstreifen, die zur Fixierung der Spulen in ihren Kammern dienenden Haltefinger ab, um so eine ungestörte Bewegung der Spulen von der Schablone herunter auf den Spulenaufnehmer hinauf zu ermöglichen.

Konstruktiv kann dies in einer bevorzugten Ausgestaltung beispielsweise dadurch gelöst werden, daß die Haltefingereinrichtung in Kurvenbahnen einer Führungseinrichtung geführte Vorsprünge aufweist, wobei die Führungseinrichtung durch die Abstreifeinrichtung bewegbar ist.

Der Spulenaufnehmer kann als Übertragungswerkzeug oder als Einziehwerkzeug ausgebildet sein.

Die Erfindung wird im folgenden anhand bevorzugter Ausführungsbeispiele in Verbindung mit der Zeichnung näher beschrieben. Hierin zeigen:
- Fig. 1: eine Seitenansicht einer Vorrichtung,
- Fig. 2: eine Seitenansicht einer Schablone und
- Fig. 3: eine Seitenansicht einer zweiten Ausführungsform.

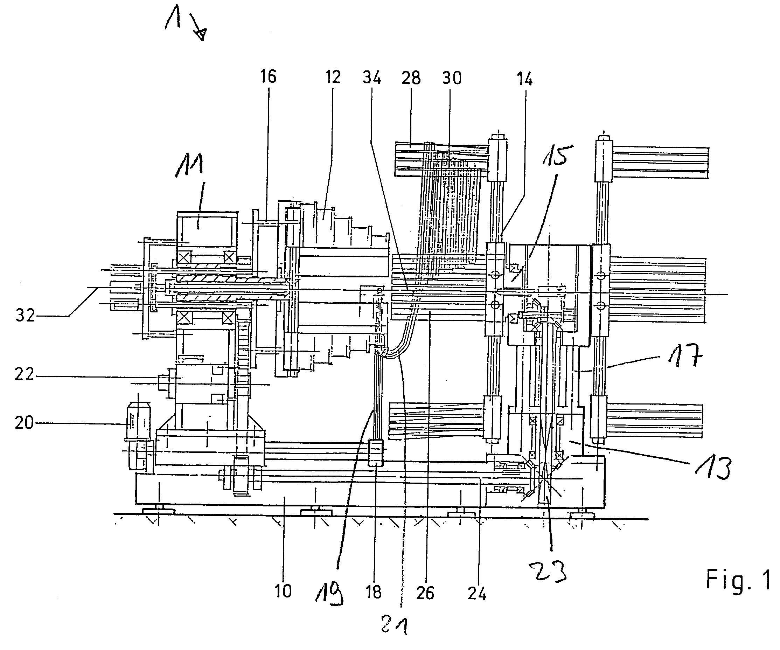

Fig. 1 zeigt eine Wickelvorrichtung 1 mit einem im wesentlichen U-förmigen Gestell 10, an dessen linkem Schenkel eine Schablone 12 und an dessen rechten Schenkel 13 ein Spulenaufnehmer 14 gelagert ist. Die Schablone 12 ist im linken Schenkel 11 drehbar und axial verschiebbar gelagert. Die Schablone 12 weist ferner einen Abstreifer 16 auf.

Im Bereich der axialen Erstreckung der Schablone 12 ist eine Verlegeeinheit 18 angeordnet, die mittels eines Motors 20 entlang der Schablone 12 geführt werden kann, so daß Paralleldrähte 19 aus nicht gezeigten Vorratstonnen oder -spulen über die Verlegeeinheit 18 auf die Schablone 12 geführt werden können, wenn die Schablone gedreht wird. Die Verlegeeinheit 18 ist hierbei in Umfangsrichtung der Schablone ortsfest angeordnet, d.h. bei einer Drehung der Schablone 12 werden die Paralleldrähte 19 aus der Verlegeeinheit 18 herausgezogen.

Die Schablone 12 selbst wird über einen weiteren Motor 22 angetrieben, der über ein im Gehäuse 10 geführtes Gestänge 24 auch den Spulenaufnehmer 14 mit antreibt. Die Übersetzung zwischen Motor 22 und Schablone 12 beziehungsweise zwischen Motor 22 und Spulenaufnehmer 14 ist so gewählt, daß sich der Spulenaufnehmer 14 mit der gleichen Drehzahl und in die gleiche Richtung wie die Schablone 12 dreht. Angedeutet ist eine Kupplungseinrichtung 23, mit deren Hilfe die Wirkverbindung zwischen dem Motor 22 und dem Spulenaufnehmer 14 unterbrochen werden kann. Es kann also auch die Schablone 12 angetrieben werden, ohne daß sich der Spulenaufnehmer 14 gleichzeitig drehen muß.

Der Spulenaufnehmer 14 weist zur Aufnahme von Spulengruppen eine Anzahl von Stäben auf, nämlich mittlere Stäbe 26, die in einem runden Kranz angeordnet sind, und äußere Stäbe 28, die in einzelnen Segmenten in Umfangsrichtung verteilt angeordnet sind. Die äußeren Stäbe 28 können mit ihrem vom Spulenaufnehmer 14 wegweisenden Ende nach außen geneigt werden. Eine auf dem Spulenaufnehmer 14 aufgenommene Spulengruppe wird dadurch gespannt und, wegen des größeren Abstandes der Stäbe 28 von den Stäben 26 an ihrem äußeren Ende, daran gehindert, vom Spulenaufnehmer 14 herunterzurutschen.

Der Spulenaufnehmer 14 ist auf einem Träger 15 angeordnet und gegenüber diesem relativ verschiebbar. Der Träger 14 seinerseits ist auf einem Gestänge 17 nach oben und nach unten verfahrbar und in zwei Positionen festlegbar. In der dargestellten Position, der Wickelposition, haben die Schablone 12 und der Spulenaufnehmer 14 die gleiche Drehachse, d.h. die Mittellängsachse 32 der Schablone 12 fluchtet mit der Mittellängsachse 34 des Spulenaufnehmers 14. Die Schablone 12 und der Spulenaufnehmer 14 können sich gemeinsam drehen, ohne daß eine Verbindung 21 zwischen der bereits fertig gewickelten und auf den Spulenaufnehmer 14 übertragenen Spulengruppe 30 und einer auf der Schablone 12 neu zu wickelnden Spulengruppe durch die Bewegung der Schablone 12 abreißen oder sich die Drähte dort verdrillen können. Dadurch, daß sowohl die Schablone 12 als auch der Spulenaufnehmer 14 um ihre Mittellängsachsen 32 beziehungsweise 34 gedreht werden, treten praktisch keine Unwuchten auf beziehungsweise nur solche Unwuchten, die beherrschbar sind. Man kann also mit relativ hohen Wickelgeschwindigkeiten fahren. Sollte es, beispielsweise aufgrund eines großen Spulengruppengewichts, doch zu merklichen Einflüssen der Spulengruppen auf den Rundlauf des Spulenaufnehmers 14 kommen, so kann man den Spulenaufnehmer 14 relativ zum Träger 15 so verschieben, daß sich der Massenschwerpunkt auf der Drehachse 32 der Schablone 12 befindet. In diesem Fall wird die Unwucht relativ schnell ausgeglichen. Die Verschiebung zwischen dem Spulenaufnehmer 14 und dem Träger 15 ist immer nur dann notwendig, wenn eine einseitige Unwucht existiert. Durch eine geschickte Verteilung der einzelnen Spulengruppen auf dem Spulenaufnehmer 14 läßt sich das Entstehen der Unwuchten minimieren. So kann man beispielsweise um 180° auf dem Spulenträger 14 versetzt angeordnete Spulengruppen unmittelbar nacheinander wickeln. Eine größere Unwucht tritt dann nur bei jeder zweiten Spulengruppe auf.

Die gemeinsame Drehbarkeit von Schablone 12 und Spulenträger 14 ist natürlich nur dann notwendig, wenn die einzelnen Spulengruppen untereinander verbunden bleiben sollen. Wenn die Verbindungen 21 auch unterbrochen werden können, kann der Spulenträger 14 auch stillstehen bleiben, während die Schablone 12 zum Wickeln der Spulengruppen gedreht wird.

Wenn nun die Schablone 12 mit der nächsten Spulengruppe bewickelt ist, fährt der Spulenaufnehmer 14 nach oben, so daß die freien Stäbe 26, 28 mit der Schablone 12 fluchten. In dieser Stellung wird die Schablone 12 axial nach rechts verschoben. Der Spulenaufnehmer 14 kommt damit in Eingriff mit der Schablone 12. Der Abstreifer 16 tritt in Aktion und streift die fertig gewickelte Spule in einem Zug auf den Spulenaufnehmer 14. Es ist auch möglich, mit dem Abstreifer 16 nur kurz hinter die Stäbe 26, 28 des Spulenaufnehmers 14 zu fahren und die Schablone 12 wieder nach links zurückzufahren, um die Spulengruppe abzustreifen. Anschließend wird die Spulengruppe auf den Stäben durch Neigen der äußeren Stäbe 28 nach außen fixiert, und der Spulenaufnehmer 14 kann wieder in die in Fig. 1 gezeigte Wickelstellung fahren.

In Fig. 1 ist ein Zustand gezeigt, in dem eine Spulengruppe 30 im Spulenaufnehmer 14 abgelegt und das Ende 21 der Wicklung an der Schablone 12 festgelegt ist, so daß bei erneutem Anfahren der Schablone 12 der Spulenaufnehmer 14 mitdrehen muß, damit die durch das Ende 21 gebildete Schaltverbindung nicht unterbrochen wird.

Ein Drehen des Spulenaufnehmers 14 ist auch dann nicht notwendig, wenn noch keine Spulengruppe 30 in den Spulenaufnehmer verbracht worden ist, weil dann keine Schaltverbindung 21 gesichert werden muß.

Auf die gleiche Art und Weise können alle für eine Phase notwendigen Spulengruppen auf den Spulenaufnehmer 14 übertragen werden. Dies sind zum Beispiel bei einer vierpoligen Maschine vier Spulengruppen pro Phase, die jeweils um 90° in Umfangsrichtung versetzt im Spulenaufnehmer 14 abgelegt werden. Der Spulenaufnehmer 14 wird dann zumindest nach der Aufnahme der ersten drei Spulengruppen jeweils um 90° in bezug auf die Schablone verdreht. Bei anderen Polzahlen ändern sich die Winkelschritte entsprechend. Nachdem eine komplette Phase der Wicklung in den Spulenaufnehmer 14 übertragen wurde, schwenkt dieser um 180° aus dem Schablonenbereich heraus. Gleichzeitig schwenkt ein neuer Spulenaufnehmer 14 in den Schablonenbereich ein. Der herausgeschwenkte Spulenaufnehmer wird einem nicht näher dargestellten Einziehwerkzeug zugeführt, und die Spulen können übertragen werden.

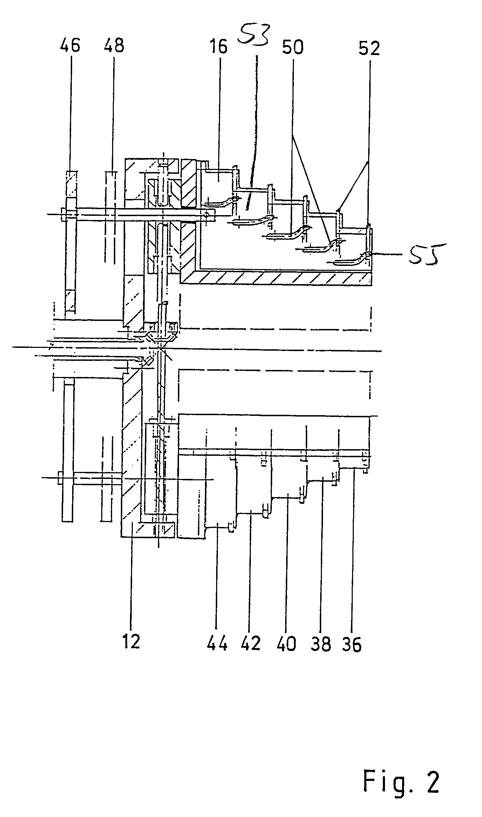

In Fig. 2 ist eine Schablone 12 gezeigt, in der der Abstreifer 16 geführt gehalten ist und eine Position eingenommen hat, in der die Schablone 12 bewickelt werden kann. Die Schablone weist einzelne Kammern 36, 38, 40, 42, 44 auf, wobei jede dieser Kammern für eine Spule der Spulengruppe vorgesehen ist. Die einzelnen Spulen sind dabei für unterschiedliche Schrittweiten vorgesehen. Sind die einzelnen Kammern 36 bis 44 bewickelt und hat die Schablone 12 die Übergabeposition zum Spulenaufnehmer 14 eingenommen, so kann der Abstreifer 16 aus einer Ruheposition 46 in eine Abstreifposition 48 verfahren werden. Hierbei entriegelt er zuerst über eine in einer Führungseinrichtung 53 angeordnete Kurvenbahn 50 gesteuerte Haltefinger 52, die Vorsprünge 55 in den Kurvenbahnen 50 aufweisen und die im Ruhezustand über den Umfang der einzelnen Kammern 36 bis 44 vorstehen und die Spulen am Herunterrutschen aus den Kammern heraus hindern, und streift anschließend die gesamte Spulengruppe 30 in den Spulenaufnehmer 14. Beim Zurückfahren des Abstreifers 16 werden die Haltefinger 52 wieder ausgefahren und bilden somit jeweils einen Abschluß für ihre Wickelkammer 36 bis 44 mit dem Vorteil, daß beim erneuten Bewickeln die einzelnen Spulenwindungen in der Kammer besser gehalten und so mit mehr Windungen aufgenommen werden können. Es ist bei diesem Wickelprinzip nicht erforderlich, bei der kleinsten Kammer 36 anzufangen. Es ist durchaus möglich, bei der größten Kammer 44 anzufangen oder wahlweise, wenn es erforderlich ist, nur bestimmte Kammern oder nur eine Kammer zu bewickeln.

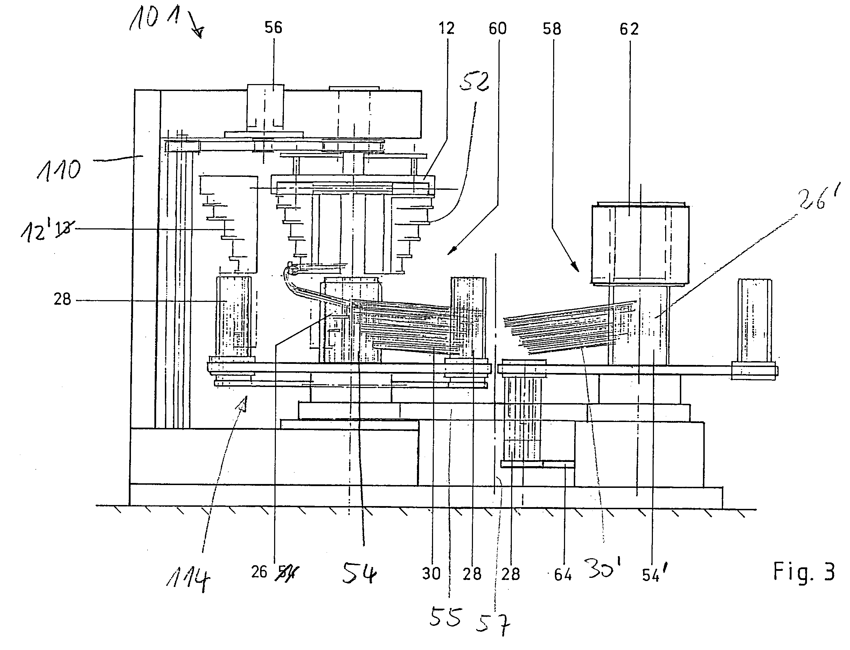

Fig. 3 zeigt eine weitere Ausführungsform einer Wickelvorrichtung 101, bei der gleiche Teile mit gleichen, entsprechende Teile mit um 100 erhöhten Bezugszeichen versehen sind.

Im Gegensatz zur Ausführungsform der Fig. 1 sind im Beispiel der Fig. 3 die Schablone 12 und der Spulenaufnehmer 114 nicht horizontal nebeneinander, sondern vertikal übereinander angeordnet. Hierbei ist die Schablone 12 oberhalb des Spulenaufnehmers 114 angeordnet. Die Übergabe der Spulengruppe von der Schablone 12 auf den Spulenaufnehmer 114 wird dann nach dem Einfahren der Haltefinger 52 durch die Schwerkraft unterstützt.

Während in der Ausführungsform nach Fig. 1 der Spulenaufnehmer 14 als Übertragungswerkzeug ausgebildet war, ist der Spulenaufnehmer 114 in der Ausführungsform nach Fig. 3 als Einziehwerkzeug 54 ausgebildet, d.h. es sind nur noch zwei Schritte notwendig, um die Spulengruppen einer Phase in den Stator der elektrischen Maschine einzuziehen, nämlich einmal die Übertragung der Spulengruppen von der Schablone 12 auf das Einziehwerkzeug 54 und zum andern der auf dem Einziehwerkzeug 54 fertiggestellten Teil-Wicklung in die elektrische Maschine.

Weiterhin ist gegenüber der Ausführungsform nach Fig. 1 geändert, daß nicht mehr der Spulenaufnehmer 14, sondern die Schablone 12 radial gegenüber ihrer Drehachse verfahrbar ist, um aus einer Wickelposition, die in Fig. 3 für die Schablone 12 dargestellt ist, in eine Übergabeposition zu gelangen, die mit einer halben Schablone 12' links von der Schablone 12 angedeutet ist. In dieser Übergabeposition steht die Schablone 12' den Stäben 26, 28 gegenüber und kann mit diesen in Eingriff gebracht werden, so daß in dieser Position eine Übertragung der Spulengruppe von der Schablone 12 auf den Spulenaufnehmer 114 problemlos möglich ist. Da der Spulenaufnehmer 114 als Einziehwerkzeug 54 ausgebildet ist, sind die mittleren Stäbe 26 als Einzieh- und Deckstreifenlamellen ausgebildet.

Ein Motor 56 ist zum Rotationsantrieb von Schablone 12 und Spulenaufnehmer 114 vorgesehen.

In Fig. 3 sind zwei Einziehwerkzeuge 54, 54' dargestellt, die auf einem gemeinsamen Träger 55 um eine Drehachse 57 gedreht werden können. Während ein Einziehwerkzeug 54 in eine Wickelstation 60 verbracht wird, wird das andere Einziehwerkzeug 54' in eine Einziehstation 58 verbracht. Dort wird auf die Einziehlamellen 26' ein Stator 62 einer elektrischen Maschine aufgesetzt. Gleichzeitig wird ein Flansch 64, an dem Segmente der äußeren Stäbe 28 befestigt sind, abgesenkt, wodurch in bekannter Weise die Spulengruppen 30' in den Stator 62 eingezogen werden können. Während des Einziehens der Spulengruppen 30', von denen aus Gründen der Übersicht lediglich eine dargestellt ist, kann in der Wickelstation 60 eine andere Wicklung beziehungsweise Teilwicklung fertiggestellt werden. Wenn die beiden Arbeitsschritte beendet worden sind, wird der Träger 55 um 180° um die Achse 57 gedreht, so daß das Herstellen einer neuen Wicklung beziehungsweise Teilwicklung und das Einziehen dieser Teilwicklungen in den Stator 62 praktisch ohne größere Unterbrechungen fortgesetzt werden können.

## Patentansprüche

1. Verfahren zum Herstellen von Rotor- oder Statorwicklungen elektrischer Maschinen aus Paralleldrähten, bei dem Spulen einer Spulengruppe auf einer Schablone durch Drehen der Schablone, insbesondere unter Abziehen der Paralleldrähte aus einer in Umfangsrichtung der Schablone ortsfesten Zuführeinrichtung, gewickelt und die fertige Spulengruppe dann auf einen Spulenaufnehmer übertragen wird, dadurch gekennzeichnet, daß nacheinander mehrere Spulengruppen auf den Spulenaufnehmer übertragen werden, wobei der Spulenaufnehmer für jede Spulengruppe in eine andere Drehwinkelstellung in Bezug zur Schablone verbracht wird.

2. Verfahren nach Anspruch 1, dadurch gekennzeichnet, daß der Spulenaufnehmer während des Wickelns der Spulengruppe in seine entsprechende Übergabgeposition verfahren wird.

3. Verfahren nach Anspruch 1 oder 2, dadurch gekennzeichnet, daß die Spulengruppen jeweils in einem Zug von der Schablone auf den Spulenaufnehmer übertragen werden.

4. Verfahren nach einem der Ansprüche 1 bis 3, dadurch gekennzeichnet, daß der Spulenaufnehmer zumindest dann, wenn er eine Spulengruppe aufgenommen hat, synchron mit der Schablone gedreht wird, solange diese bewickelt wird.

5. Verfahren nach einem der Ansprüche 1 bis 4, dadurch gekennzeichnet, daß der Spulenaufnehmer und die Schablone zum Wickeln der Spulengruppe in eine erste radiale Ausrichtung zueinander und zur Übergabe der Spulengruppe in eine zweite radiale Ausrichtung zueinander gebracht werden.

6. Verfahren nach Anspruch 5, dadurch gekennzeichnet, daß in der ersten radialen Ausrichtung die Mittellängsachsen von Schablone und Spulenträger auf einer gemeinsamen Drehachse angeordnet werden.

7. Verfahren nach Anspruch 5, dadurch gekennzeichnet, daß in der ersten radialen Ausrichtung die Mittellängsachse der Schablone und der Massenschwerpunkt des bewickelten Spulenaufnehmers zumindest annähernd auf einer gemeinsamen Drehachse angeordnet sind.

8. Verfahren nach einem der Ansprüche 1 bis 7, dadurch gekennzeichnet, daß der Spulenaufnehmer nur während des Wickelns der ersten Spule nicht mitgedreht, sondern in die zweite radiale Ausrichtung zur Schablone verbracht wird.

9. Verfahren nach einem der Ansprüche 1 bis 8, dadurch gekennzeichnet, daß der Spulenaufnehmer und die Schablone zur Übergabe der Spulengruppe miteinander in Eingriff gebracht werden.

10. Verfahren nach einem der Ansprüche 1 bis 9, dadurch gekennzeichnet, daß um 180° auf dem Spulenaufnehmer auseinanderliegende Spulengruppen unmittelbar aufeinanderfolgend gewickelt werden.

11. Vorrichtung zum Herstellen von Rotor- oder Statorwicklungen elektrischer Maschinen aus Paralleldrähten mit einer drehbaren Schablone, die einen Schablonenantrieb aufweist, einer in Umfangsrichtung der Schablone ortsfesten Drahtführung und einem Spulenaufnehmer, insbesondere zur Durchführung des Verfahrens nach einem der Ansprüche 1 bis 10, dadurch gekennzeichnet, daß der Spulenaufnehmer (14, 114) relativ zur Schablone (12, 12') in vorbestimmte Übergabewinkelstellungen verbringbar ist und einen Aufnahmeraum für alle oder zumindest mehrere Spulengruppen (30) einer Wicklung aufweist.

12. Vorrichtung nach Anspruch 11, dadurch gekennzeichnet, daß der Spulenaufnehmer (14, 114) drehbar gelagert ist und einen mit dem Schablonenantrieb (22, 56) synchronisierbaren Aufnehmerantrieb (24) aufweist, wobei Schablone (12, 12') und Spulenaufnehmer (14, 114) zumindest in eine radiale Richtung relativ zueinander bewegbar sind.

13. Vorrichtung nach Anspruch 12, dadurch gekennzeichnet, daß die Schablone (12, 12') und der Spulenaufnehmer (14, 114) in einer ersten radialen Stellung relativ zueinander eine gemeinsame Drehachse (32, 34) aufweisen und in einer zweiten radialen Stellung Aufnahmeelemente (26, 28) des Spulenaufnehmers (14, 114) mit der Schablone (12, 12') in Eingriff bringbar sind.

14. Vorrichtung nach Anspruch 13, dadurch gekennzeichnet, daß die Drehachse etwa durch den Massenschwerpunkt des leeren Spulenaufnehmers beziehungsweise bei beladenem Spulenaufnehmer durch den resultierenden Massenschwerpunkt des Spulenaufnehmers (14) und der darauf befindlichen Spulengruppe (30) verläuft.

15. Vorrichtung nach Anspruch 13 oder 14, dadurch gekennzeichnet, daß die Schablone (12) und/oder der Spulenaufnehmer (14) in der zweiten Stellung axial zueinander bewegbar sind.

16. Vorrichtung nach einem der Ansprüche 12 bis 15, dadurch gekennzeichnet, daß der Spulenaufnehmer und/oder die Schablone auf je einem drehbaren Träger (15) montiert und radial zu diesem verschiebbar sind.

17. Vorrichtung nach Anspruch 16, dadurch gekennzeichnet, daß der Träger (15) senkrecht zur Drehachse (34) bewegbar ist.

18. Vorrichtung nach Anspruch 17, dadurch gekennzeichnet, daß der Träger (15) in mindestens zwei Positionen festlegbar.

19. Vorrichtung nach einem der Ansprüche 13 bis 18, dadurch gekennzeichnet, daß die Aufnahmeelemente (26, 28) spannbar sind.

20. Vorrichtung nach Anspruch 19, dadurch gekennzeichnet, daß die Aufnahmeelemente (26, 28) durch Stäbe gebildet sind, von denen zumindest einige in Bezug zu ihrer Aufnahmestellung neigbar sind.

21. Vorrichtung nach einem der Ansprüche 12 bis 20, dadurch gekennzeichnet, daß die Schablone (12) eine Abstreifvorrichtung (16) aufweist.

22. Vorrichtung nach Anspruch 21, dadurch gekennzeichnet, daß die Schablone (12) mehrere Kammern (36, 38, 40, 42, 44) aufweist, wobei jede Kammer mit einer über den radialen Umfang der Kammer vorstehenden Haltefingereinrichtung (52) versehen ist, die durch eine Bewegung der Abstreifeinrichtung (16) absenkbar ist.

23. Vorrichtung nach Anspruch 22, dadurch gekennzeichnet, daß die Haltefingereinrichtung (52) in Kurvenbahnen (50) einer Führungseinrichtung (53) geführte Vorsprünge (55) aufweist, wobei die Führungseinrichtung (53) durch die Abstreifeinrichtung (16) bewegbar ist.

24. Vorrichtung nach Anspruch 23, dadurch gekennzeichnet, daß der Spulenaufnehmer (14, 114) als Übergabewerkzeug oder als Einziehwerkzeug (54) ausgebildet ist.
